(19)
Europäisches Patentamt
European Patent Office
Office européen des brevets

(11) **EP 2 966 611 A1**

(12) **EUROPEAN PATENT APPLICATION**
published in accordance with Art. 153(4) EPC

(43) Date of publication:
**13.01.2016 Bulletin 2016/02**

(21) Application number: **13824088.2**

(22) Date of filing: **16.12.2013**

(51) Int Cl.:
*G06Q 50/06* (2012.01)     *B60L 11/18* (2006.01)
*H02J 3/32* (2006.01)

(86) International application number:
**PCT/JP2013/083652**

(87) International publication number:
**WO 2014/136352 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.03.2013 JP 2013043211**

(71) Applicant: **Kabushiki Kaisha Toshiba**
**Minato-ku**
**Tokyo 105-8001 (JP)**

(72) Inventors:
• **WADA, Takahisa**
**Tokyo 105-8001 (JP)**
• **KUBOTA, Kazuto**
**Tokyo 105-8001 (JP)**

• **KATAYAMA, Kyosuke**
**Tokyo 105-8001 (JP)**
• **MATSUE, Kiyotaka**
**Tokyo 105-8001 (JP)**
• **SUYAMA, Akihiro**
**Tokyo 105-8001 (JP)**
• **TANIMOTO, Tomohiko**
**Tokyo 105-8001 (JP)**
• **TAIRA, Hiroshi**
**Tokyo 105-8001 (JP)**

(74) Representative: **Moreland, David et al**
**Marks & Clerk LLP**
**Aurora**
**120 Bothwell Street**
**Glasgow G2 7JS (GB)**

(54) **ENERGY MANAGEMENT SYSTEM, ENERGY MANAGEMENT METHOD, PROGRAM, AND SERVER**

F I G. 3

(57)     According to an embodiment, an energy management system manages energy of a customer, including a connector connected to a vehicle including an on-vehicle battery and capable of sending/receiving power to/from the on-vehicle battery, and a power generation unit. The energy management system includes an estimation unit, a creation unit, and a control unit. The estimation unit estimates a demand of the customer to obtain a demand estimated value, and estimates the power production amount of the power generation unit to obtain a production amount estimated value. The creation unit creates a discharge strategy capable of maximizing a value obtained by subtracting an electricity purchase loss from an electricity selling profit using the push up effect of a sold electricity amount by discharge of the on-vehicle battery based on the demand estimated value and the production amount estimated value under a constraint for use of the on-vehicle battery. The control unit controls discharge of the on-vehicle battery based on the actual value of the demand, the actual value of the production amount, and the discharge strategy.

**EP 2 966 611 A1**

**Description**

Technical Field

Embodiments described herein relate generally to an energy management system for managing the energy balance of a customer such as a home, an energy management method, a program, and a server.

Background Art

A HEMS (Home Energy Management System) has received a great deal of attention against the background of recently increasing awareness of environmental preservation and anxiety about shortages in the supply of electricity. Additionally, demonstrations and experiments of an electricity rate system (real time pricing) that changes the electricity rate depending on the time zone have already started. For customers, the cost to use energy is preferably as low as possible. For this purpose, various proposals have been made, including a patent application (Japanese Patent Application No. 2012-065300).

The HEMS can connect distributed power supplies (to be generically referred to as new energy devices hereinafter) such as a PV (Photovoltaic power generation) system, a storage battery, and an FC (Fuel Cell) and existing home electric appliances to a network and collectively manage them. In recent years, electric vehicles (EV) are proliferating, and an on-vehicle battery is assumed to be connected to the HEMS and used as one of the new energy devices.

Citation List

Patent Literatures

Patent Literature 1: Jpn. Pat. Appln. KOKAI Publication No. 2011-72166
Patent Literature 2: Jpn. Pat. Appln. KOKAI Publication No. 2011-92002
Patent Literature 3: Jpn. Pat. Appln. KOKAI Publication No. 2011-244682

Summary of Invention

Technical Problem

In Japan, the FIT (Feed-In Tariff) scheme for renewable energy went into effect on July 1, 2012. Under this scheme, a customer who makes an agreement on double power generation with an electric company can increase the sold electricity amount derived from a PV system by covering the energy demand at the time of PV power generation by discharge of a battery device. The double power generation is a configuration in which a private power generation facility or the like (battery device or the like) is installed in addition to the PV system. That is, in the double power generation mode, the sold electricity amount push up effect can be expected by discharging the private power generation facility or the like.

To pursue reduction of the heat and electricity cost under this condition, a storage battery discharge strategy considering the push up effect needs to be obtained. To create the discharge strategy, the estimated values of the energy demand and the PV power generation amount of the customer and the like need to be taken into consideration. In many cases, however, the estimated values and values (actual values) in an actual operation are different, and it may be impossible to reduce the heat and electricity cost as expected. Especially, since the on-vehicle battery is not always connected to the customer's home, the discharge strategy needs to take this into consideration.

An object of the present invention is to provide an energy management system capable of exploiting the characteristic of an on-vehicle battery and advantageously operating a new energy device, an energy management method, a program, and a server.

Solution to Problem

According to an embodiment, an energy management system manages energy of a customer, including a connector connected to a vehicle including an on-vehicle battery and capable of sending/receiving power to/from the on-vehicle battery, and a power generation unit. The energy management system includes an estimation unit, a creation unit, and a control unit. The estimation unit estimates a demand of the customer to obtain a demand estimated value, and estimates the power production amount of the power generation unit to obtain a production amount estimated value.

The creation unit creates a discharge strategy capable of maximizing a value obtained by subtracting an electricity purchase loss from an electricity selling profit using the push up effect of a sold electricity amount by discharge of the on-vehicle battery based on the demand estimated value and the production amount estimated value under a constraint for use of the on-vehicle battery. The control unit controls discharge of the on-vehicle battery based on the actual value of the demand, the actual value of the production amount, and the discharge strategy. Brief Description of Drawings

[FIG. 1] FIG. 1 is a view showing an example of a system according to an embodiment.

[FIG. 2] FIG. 2 is a view showing an example of an energy management system according to the first embodiment.

[FIG. 3] FIG. 3 is a functional block diagram showing an example of a home server 7.

[FIG. 4] FIG. 4 is a table showing an example of a charge and discharge value table of an on-vehicle battery 4.

[FIG. 5A] FIG. 5A is a table showing an example of the unit purchase prices of electricity in the respective time zones.

[FIG. 5B] FIG. 5B is a table showing an example of the purchase price of surplus power by a PV unit 101.

[FIG. 6] FIG. 6 is a block diagram showing an example of the hardware blocks of the home server 7.

[FIG. 7] FIG. 7 is a flowchart showing an example of the processing procedure of discharge rule creation.

[FIG. 8A] FIG. 8A is a graph showing the electricity tariff of FIG. 5A.

[FIG. 8B] FIG. 8B is a graph showing an example of the charge schedule of the on-vehicle battery 4.

[FIG. 9A] FIG. 9A is a graph showing an example of a PV estimated value PV(t).

[FIG. 9B] FIG. 9B is a graph showing an example of a demand estimated value D(t).

[FIG. 9C] FIG. 9C is a graph showing an example of a discharge value V(t).

[FIG. 9D] FIG. 9D is a graph showing an example of the estimated value of a discharge value rate E(t).

[FIG. 10] FIG. 10 is a flowchart showing an example of a processing procedure of obtaining a discharge rule from the time series of the discharge value rate E(t).

[FIG. 11] FIG. 11 is a flowchart showing an example of a processing procedure of calculating a dischargeable amount DW.

[FIG. 12] FIG. 12 is a table showing an example of information acquired from a vehicle EV.

[FIG. 13A] FIG. 13A is a graph showing an example of the relationship between the chargeable time and a chargeable amount CH of the on-vehicle battery 4.

[FIG. 13B] FIG. 13B is a table showing an example of the relationship between the chargeable time and the chargeable amount CH of the on-vehicle battery 4.

[FIG. 14A] FIG. 14A is a graph showing an example of the relationship between the chargeable time, the chargeable amount CH, and the dischargeable amount DW of the on-vehicle battery 4.

[FIG. 14B] FIG. 14B is a graph showing an example of the relationship between the chargeable time, the chargeable amount CH, and the dischargeable amount DW of the on-vehicle battery 4.

[FIG. 14C] FIG. 14C is a table showing an example of the relationship between the chargeable time, the chargeable amount CH, and the dischargeable amount DW of the on-vehicle battery 4.

[FIG. 15] FIG. 15 is a flowchart showing a processing procedure of discharge command generation by a control unit 75.

[FIG. 16] FIG. 16 is a block diagram showing an example of an energy management system according to the second embodiment.

[FIG. 17] FIG. 17 is a block diagram showing an example of a server computer SV according to the second embodiment.

Description of Embodiments

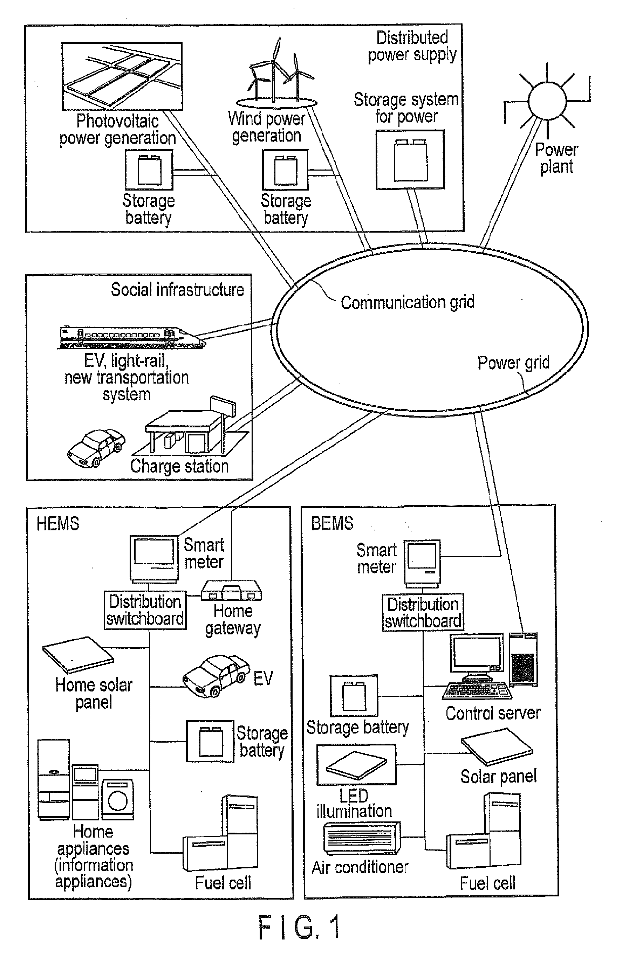

FIG. 1 is a view showing an example of a system according to an embodiment. FIG. 1 illustrates an example of a system known as a so-called smart grid. In an existing grid, existing power plants such as a nuclear power plant, a thermal power plant, and a hydraulic power plant are connected to various customers such as an ordinary household, a building, and a factory via the grid. In the next-generation power grid, distributed power supplies such as a PV (Photovoltaic power generation) system and a wind power plant, battery devices, new transportation systems, charging stations, and the like are additionally connected to the power grid. The variety of elements can communicate via a communication grid.

Systems for managing energy are generically called EMSs (Energy Management Systems). The EMSs are classified into several groups in accordance with the scale and the like. There are, for example, a HEMS (Home Energy Management System) for an ordinary household and a BEMS (Building Energy Management System) for a building. There also exist a MEMS (Mansion Energy Management System) for an apartment house, a CEMS (Community Energy Management System) for a community, and a FEMS (Factory Energy Management System) for a factory. Good energy optimization control is implemented by causing these systems to cooperate.

According to these systems, an advanced cooperative operation can be performed between the existing power plants, the distributed power supplies, the renewable energy sources such as sunlight and wind, and the customers.

This makes it possible to produce a power supply service in a new and smart form, such as an energy supply system mainly using a natural energy or a customer participating-type energy supply/demand system by bidirectional cooperation of customers and companies.

[First Embodiment]

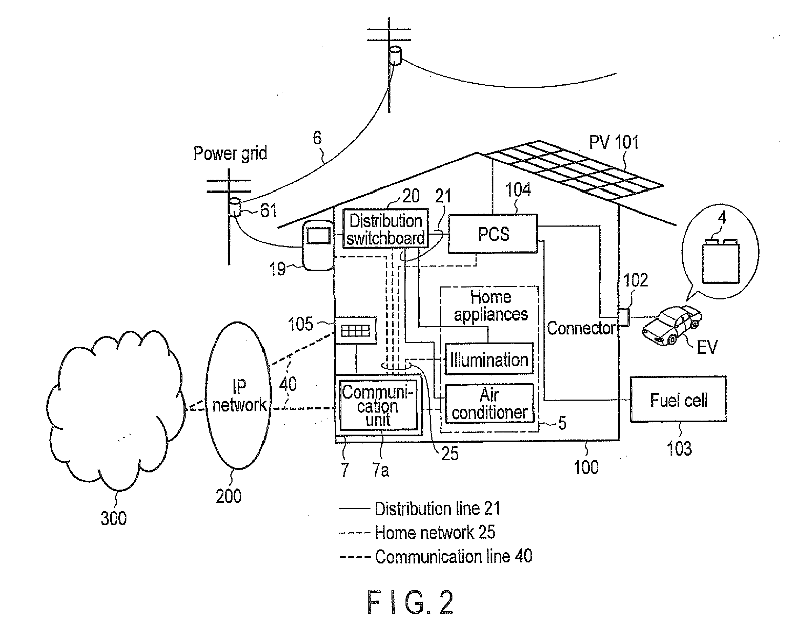

FIG. 2 is a view showing an example of an energy management system according to the first embodiment. A HEMS according to the embodiment includes a client system provided in a customer home 100, and a cloud computing system (to be referred to as a cloud hereinafter) 300 serving as a server system. Especially in this embodiment, the home 100 capable of connecting an electric vehicle (to be referred to as a vehicle hereinafter) EV is assumed.

The client system includes a home server 7 installed in the home 100. The home server 7 can communicate with the cloud 300 via a communication line 40 on, for example, an IP network 200. The IP network 200 is, for example, the so-called Internet or a VPN (Virtual Private Network) of a system vendor. The home server 7 is a client apparatus capable of communicating with the cloud 300. The home server 7 transmits various kinds of data to the cloud 300, and receives various kinds of data from the cloud 300.

Referring to FIG. 2, power (AC voltage) supplied from a power grid 6 is distributed to households via, for example, a transformer 61, and supplied to a distribution switchboard 20 in the home 100 via a watt-hour meter (smart meter) 19. The watt-hour meter 19 has a function of measuring the power generation amount of an energy generation device provided in the home 100, the power consumption of the home 100, the electric energy supplied from the power grid 6, or the amount of reverse power flow to the power grid 6. As is known, power generated based on renewable energy is permitted to flow back to the power grid 6.

The distribution switchboard 20 supplies, via distribution lines 21, power to home appliances (for example, lighting equipment and air conditioner) 5 and a power conditioning system (PCS) 104 connected to the distribution switchboard 20. The distribution switchboard 20 also includes a measuring device for measuring the electric energy of each feeder.

The home 100 includes electrical apparatuses. The electrical apparatuses are apparatuses connectable to the distribution lines 21 in the home 100. An apparatus (load) that consumes power, an apparatus that generates power, an apparatus that consumes and generates power, and a storage battery correspond to the electrical apparatuses. That is, the home appliances 5, a PV unit 101, an on-vehicle battery 4, and a fuel cell (to be referred to as an FC unit hereinafter) 103 correspond to the electrical apparatuses. The electrical apparatuses are detachably connected to the distribution lines 21 via sockets (not shown) and then connected to the distribution switchboard 20 via the distribution lines 21.

A connector 102 is installed in, for example, the garage of the home 100. The vehicle EV can be connected to the distribution line 21 via the connector 102. Power from the distribution line 21 can charge the on-vehicle battery 4. In addition, power extracted from the on-vehicle battery 4 can be supplied to the distribution line 21.

The connector 102 has the function of an interface capable of transferring power between the home 100 and the on-vehicle battery 4. The connector 102 may have the function of an interface that allows the vehicle EV to communicate with the home server 7.

The PV unit 101 is installed on the roof or wall of the home 100. The PV unit 101 is an energy generation apparatus that produces electric energy from renewable energy. A wind power generation system or the like also belongs to the category of energy generation apparatuses. If surplus power derived from renewable energy occurs, the surplus power can be sold to the power grid 6.

The FC unit 103 is a power generation unit for producing power from city gas or LP gas (liquefied propane gas) that is nonrenewable energy. Since the power generated by the FC unit 103 is prohibited from flowing back to the power grid 6, surplus power may occur. The surplus power can charge the on-vehicle battery 4.

The PCS 104 includes a converter (not shown). The PCS 104 causes the converter to convert AC power from the distribution lines 21 into DC power and supplies it to the on-vehicle battery 4. The PCS 104 also includes an inverter (not shown). The PCS 104 causes the inverter to convert DC power supplied from the PV unit 101, the on-vehicle battery 4, or the FC unit 103 into AC power and supplies it to the distribution lines 21. The electrical apparatuses can thus receive power supplied from the on-vehicle battery 4 and the FC unit 103 via the PCS 104.

That is, the PCS 104 has the function of a power converter configured to transfer energy between the distribution lines 21 and the on-vehicle battery 4 and the FC unit 103. The PCS 104 also has a function of controlling to stably operate the on-vehicle battery 4 and the FC unit 103. Note that FIG. 2 illustrates a form in which the PCS 104 is commonly connected to the PV unit 101, the on-vehicle battery 4, and the FC unit 103. In place of this form, the PV unit 101, the on-vehicle battery 4, and the FC unit 103 may individually have the function of the PCS.

A home network 25 such as a LAN (Local Area Network) is formed in the home 100. The home server 7 is detachably connected to both the home network 25 and an IP network 200 via a connector (not shown) or the like. The home server 7 can thus communicate with the watt-hour meter 19, the distribution switchboard 20, the PCS 104, and the electrical apparatuses 5 connected to the home network 25. Note that the home network 25 can be either wireless or wired.

The home server 7 includes a communication unit 7a as a processing function according to the embodiment. The communication unit 7a is a network interface that transmits various kinds of data to the cloud 300 and receives various kinds of data from the cloud 300.

The home server 7 is connected to a terminal 105 via a wired or wireless network. The functions of a local server can also be implemented by the home server 7 and the terminal 105. The terminal 105 can be, for example, a general-purpose portable information device, personal computer, or tablet terminal as well as a so-called touch panel.

The terminal 105 notifies the customer (user) of the operation state and power consumption of each of the electrical apparatuses 5, the PV unit 101, the on-vehicle battery 4, and the FC unit 103 by, for example, displaying them on an LCD (Liquid Crystal Display) or using voice guidance. The terminal 105 includes an operation panel and accepts various kinds of operations and settings input by the customer. The user can also input, via the terminal 105, designation (command) to request the cloud 300 to recalculate the operation schedule of the electrical apparatuses 5 or give the system information necessary for the recalculation.

The terminal 105 includes a user interface configured to reflect the user's intention on control of the electrical apparatuses 5. The user interface includes a display device that displays the charge and discharge schedule of the on-vehicle battery 4 or the like. The user can see the contents displayed on the display device and confirm the schedule or select permission or rejection of execution of the displayed schedule. The user's intention can thus be reflected on schedule execution.

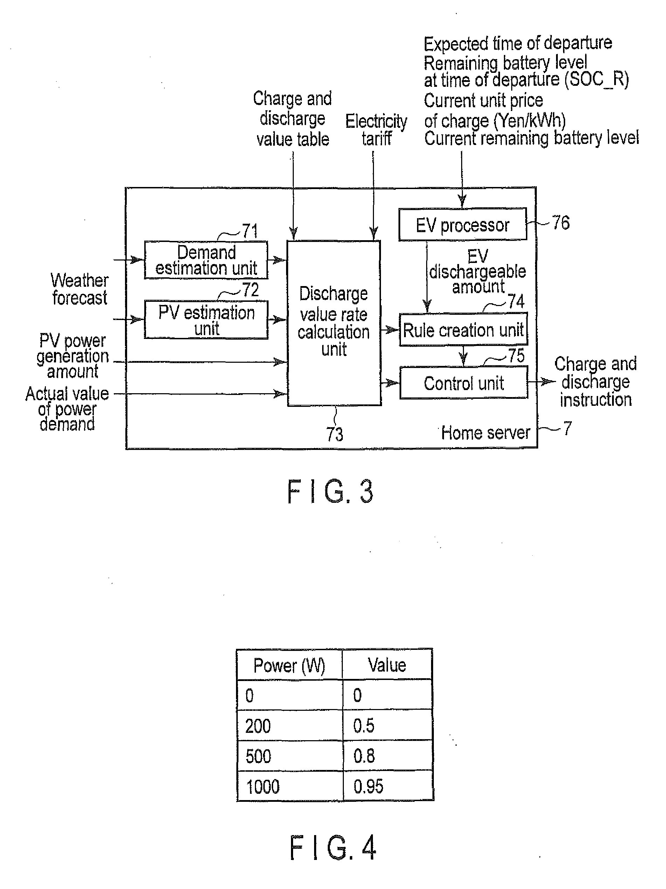

FIG. 3 is a functional block diagram showing an example of the home server 7. The home server 7 includes a demand estimation unit 71, a PV estimation unit 72, a discharge value rate calculation unit 73, a rule creation unit 74, a control unit 75, and an EV processor 76.

The demand estimation unit 71 estimates the energy demand of the customer and obtains a demand estimated value. The demand estimation unit 71 estimates the demand of the next day using, for example, the past demand history of the home 100. The demand estimation of the next day is obtained using, for example, the demand of the same day of the previous week.

Alternatively, the demand estimation unit 71 estimates the demand from a certain time of the estimation day of interest from the demand up to that time. To obtain the demand estimated value from the certain time of the day of interest, a demand curve similar to the demand curve up to that time is searched for from the past history. Then, the demand estimated value is obtained based on the matching curve from the time. The demand can be obtained by various methods other than the above-described one. The demand estimated value can be corrected using meteorological information or the like.

The PV estimation unit 72 estimates power production (to be referred to as a power generation amount hereinafter) of the PV unit 101 and obtains the estimated value of the power generation amount (PV estimated value). The time series of the PV estimated value is represented by $PV(t)$.

The PV estimated value can be calculated based on, for example, the past track record data value of the power generation amount or a weather forecast. For example, a method of estimating an amount of insolation from a weather forecast every three hours is described in literature "Shimada & Kurokawa, "Insolation Forecasting Using Weather Forecast with Weather Change Patterns", IEEJ Trans. PE, pp. 1219-1225, Vol. 127, No. 11, 2007.

The discharge value rate calculation unit 73 calculates the discharge value and the discharge value rate. The discharge value is an index used to evaluate the electricity selling profit considering the push up effect. The discharge value rate is the discharge value per unit electric energy.

The discharge value rate calculation unit 73 also calculates an estimated value and an actual value for each of the discharge value and the discharge value rate. That is, the discharge value rate calculation unit 73 calculates the estimated value of the discharge value, the estimated value of the discharge value rate, the actual value of the discharge value, and the actual value of the discharge value rate.

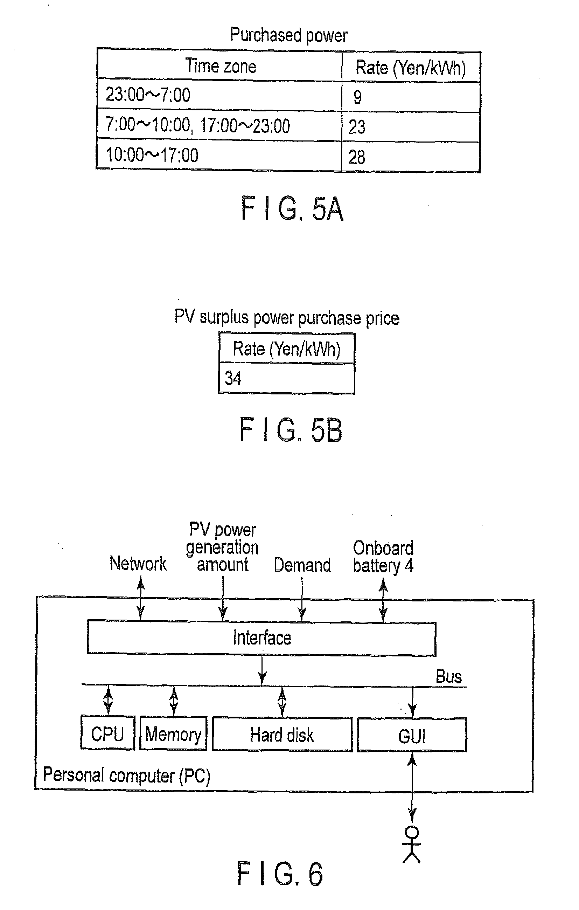

The estimated value of the discharge value is calculated as the sum of the cancel amount of the electricity purchase loss when the demand estimated value is covered by discharge of the on-vehicle battery 4 and the electricity selling profit based on the PV estimated value. To calculate the estimated value of the discharge value, the discharge value rate calculation unit 73 refers to not only the demand estimated value and the estimated value of the power generation amount but also the charge and discharge value table shown in FIG. 4 and the electricity tariff shown in FIGS. 5A and 5B.

The charge and discharge value table associates the value of power accumulated in (or extracted from) the on-vehicle battery 4 with the efficiency of accumulating (or extracting) power of the value. FIG. 4 shows that the charge or discharge value of power of, for example, 500 watt [W] is 0.8. Values that do not exist in the table of FIG. 4 can be obtained by interpolation.

The electricity tariff is a list of electricity rates by time zone. FIG. 5A shows an example of the unit purchase prices of electricity in the respective time zones. As is apparent from the agreement shown in FIG. 5A, the rate in the time zone including the demand peak during daytime hours exceeds three times the rate in the nighttime. FIG. 5B shows an example of the purchase price of surplus power by the PV unit 101. In the example of FIG. 5B, the purchase price is 34 yen across the board independently of the time zone.

The estimated value of the discharge value rate is calculated by dividing the estimated value of the discharge value by the discharge amount of the on-vehicle battery 4 (demand estimated value).

The actual value of the discharge value is calculated as the sum of the cancel amount of the electricity purchase loss when the actual value of the demand is covered by discharge of the on-vehicle battery 4 and the electricity selling profit based on the actual value of the PV power generation amount. The actual value of the discharge value rate is calculated by dividing the actual value of the discharge value by the actual value of the demand.

The EV processor 76 communicates with the vehicle EV via the home network 25, and acquires the next expected time of departure of the vehicle EV, the reserved remaining battery level (SOC_R) of the on-vehicle battery 4 at the expected time, and the current remaining battery level (SOC: State Of Charge). The EV processor 76 acquires the current charge unit price (yen/kWh) as well. The EV processor 76 calculates a dischargeable amount DW of the on-vehicle battery 4 based on these acquired values.

The rule creation unit 74 decides the discharge rule of the on-vehicle battery 4 based on the estimated value of the discharge value rate and the dischargeable amount DW of the on-vehicle battery 4. The decided discharge rule is transferred to the control unit 75. The control unit 75 controls discharge of the on-vehicle battery 4 based on the discharge rule and the actual value of the discharge value rate.

The discharge value rate calculation unit 73 and the rule creation unit 74 function as a creation unit that creates the discharge strategy of the on-vehicle battery 4 based on the demand estimated value and the estimated value of the power generation amount. Using the discharge value rate calculated by the discharge value rate calculation unit 73 makes it possible to create the discharge strategy capable of maximizing a balance obtained by subtracting the electricity purchase loss from the electricity selling profit using the push up effect.

The control unit 75 controls discharge of the on-vehicle battery 4 based on the actual value of the demand, the actual value of the power generation amount, and the discharge strategy. The on-vehicle battery 4 is charged or discharged in accordance with charge and discharge designation given by the control unit 75.

FIG. 6 is a block diagram showing an example of the hardware blocks of the home server 7. The home server 7 can be implemented using, for example, a general-purpose computer as basic hardware. The home server 7 is a computer including a CPU (Central Processing Unit) and a memory. The memory stores programs configured to control the computer.

The programs include instructions to communicate with the cloud 300, request the cloud 300 to calculate the operation schedules of the electrical apparatuses 5, the on-vehicle battery 4, and the FC unit 103, and reflect a customer's intention on system control. The CPU functions based on various kinds of programs, thereby implementing various functions of the home server 7.

That is, the functional blocks of the home server 7 can be implemented by causing the CPU of the computer to execute the programs stored in the memory. The home server 7 can be implemented by installing the programs in the computer. Alternatively, the home server 7 may be implemented by storing the programs in a storage medium such as a CD-ROM or distributing the programs via a network and installing them in the computer.

As shown in FIG. 6, the computer includes the CPU, memory, hard disk, interface (IF), and graphic interface (GUI) connected to each other via a bus. The interface includes an interface used to measure the PV power generation amount and power demand, an interface between the vehicle EV and the on-vehicle battery 4, and an interface connected to the network (none are shown). The programs that implement the functions of the home server 7 are stored on the hard disk, extracted on the memory at the time of execution, and then executed in accordance with a procedure.

In particular, the home server 7 may include a power conditioning system in addition to the functional blocks shown in FIG. 3. In this form, the home server 7 may be implemented as an embedded device and installed outdoors.

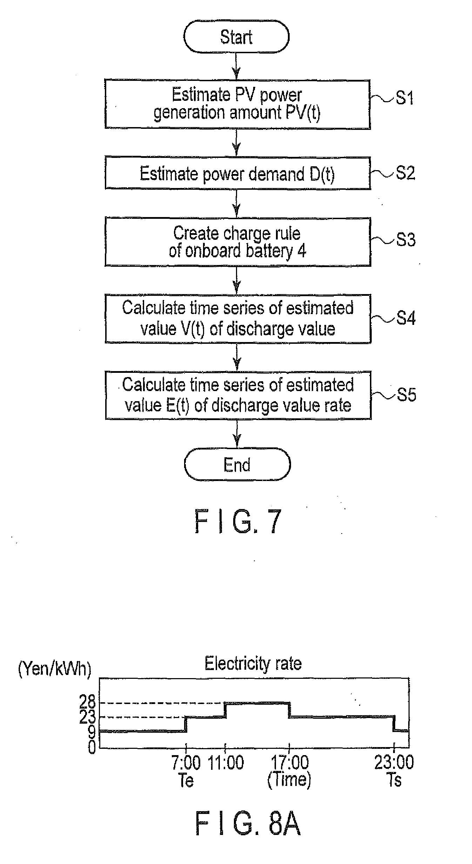

FIG. 7 is a flowchart showing an example of the processing procedure of discharge rule creation. The PV estimation unit 72 calculates the PV estimated value (step S1), and obtains a time series PV(t). The demand estimation unit 71 calculates the estimated value of the power demand (step S2), and obtains a time series D(t).

t is a variable representing a time in one day. For example, when one day (reference period) is expressed as a set of minutes (unit periods), t takes a value of 0 to 1439.

The rule creation unit 74 creates the charge rule of the on-vehicle battery 4 (step S3). The electricity purchase loss can be minimized by creating such a charge rule that completes charge in a time as short as possible in a time zone where the electricity rate is low. Let Te be the end time of the time zone where the electricity rate is minimum. The rule creation unit 74 generates a schedule that fully changes the on-vehicle battery 4 at the time Te.

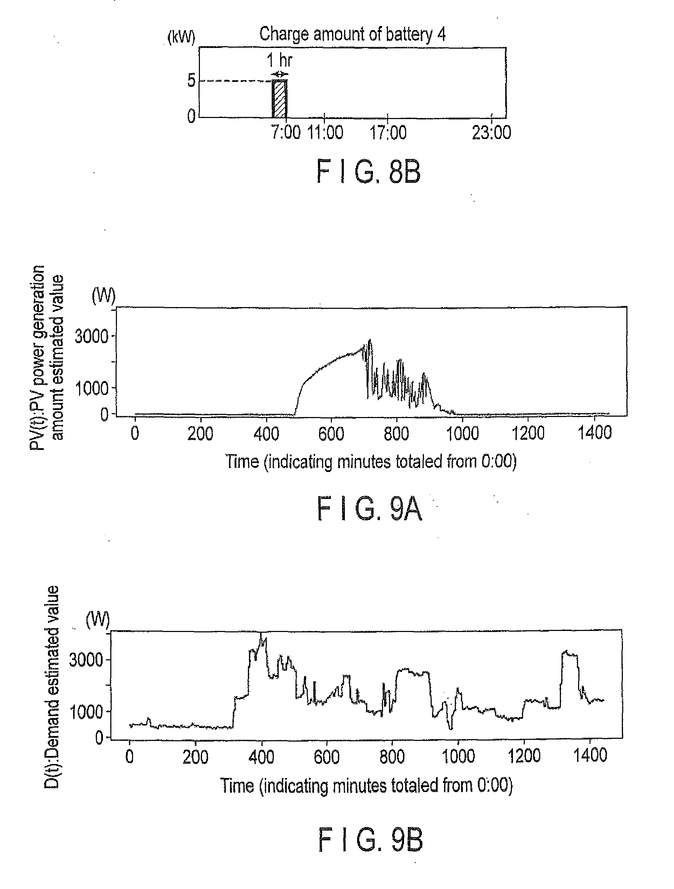

FIG. 8A is a graph showing the electricity tariff of FIG. 5A. Te is 7:00 am. Assume that the on-vehicle battery 4 before charge is empty, the battery capacity is 5 kWh, and the chargeable power is 5 kW. For example, as shown in FIG. 8B, a schedule to charge the on-vehicle battery 4 by 5 kW during the period of 6:00 to 7:00 can be created.

The discharge value rate calculation unit 73 calculates the time series of a discharge value estimated value V(t) based on equations (1) to (3) (step S4). In the first embodiment, a time series from the time Te to a time Ts at which the time zone of the minimum electricity rate starts is calculated. That is, the value V(t) in every minute as the unit period is calculated.

[Mathematical 1]

$$DovPV(t) = D(t) - PV(t) \quad (D(t) > PV(t))$$
$$= 0 \quad\quad\quad\quad (D(t) \leqq PV(t))$$
$$\cdots (1)$$

$$PVpush(t) = min(PV(t), D(t)) \quad\cdots (2)$$

$$V(t) = PVpush(t) \times PRsell + DovPV(t) \times PR(t) \quad\cdots (3)$$

$D_{OV}PV(t)$ in equation (1) is a series that is the difference between the demand estimated value D(t) and the PV estimated value PV(t) when the former exceeds the latter or 0 when the former is equal to or smaller than the latter.

PVpush(t) in equation (2) is the smaller one of PV(t) and D(t). PVpush(t) is the series of the power generation amount capable of pushing up the sold PV power amount by covering the estimated value of the power demand by discharge of the on-vehicle battery 4.

V(t) in equation (3) is value, that is, a discharge value obtained by discharge of ~PD(t) at that time. PRsell is the sales price of PV power, and PR(t) is the electricity rate. The first term of the right-hand side represents the pushed-up sales price of PV power, and indicates the estimated value of the electricity selling profit based on the power generation amount of the PV unit 101. The second term of the right-hand side indicates the cancel amount of the electricity purchase loss when the estimated value of the power demand is covered by discharge of the on-vehicle battery 4.

The discharge value rate calculation unit 73 calculates the time series of the estimated value E(t) of the discharge value rate based on equation (4) (step S5). That is, E(t) is a value obtained by dividing the discharge value V(t) by the discharge amount (or demand estimated value).

[Mathematical 2]

$$E(t) = V(t)/f(D(t)) \quad\cdots (4)$$

Function f(D(t)) of equation (4) is a function representing the discharge amount extracted from the on-vehicle battery 4 to obtain the power D(t). For example, when the discharge value with respect to 1 kW is 95%, f(1 kW) = 1.052 kW. The value after conversion by the function f is obtained using the charge and discharge value table (FIG. 4).

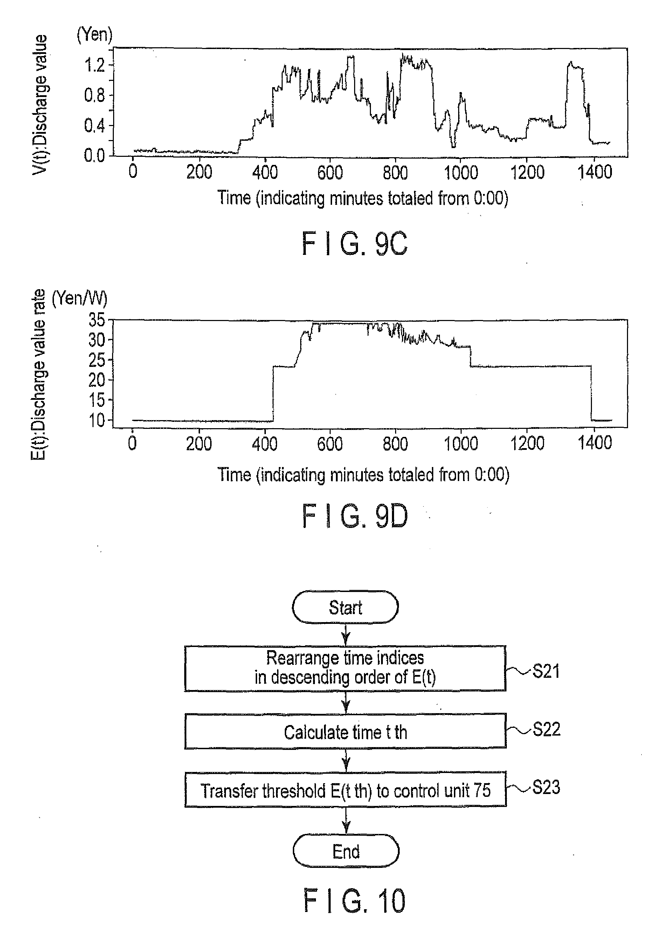

FIG. 9A is a graph showing an example of the PV estimated value PV(t). FIG. 9B is a graph showing an example of the demand estimated value D(t). FIG. 9C is a graph showing an example of the estimated value of the discharge value V(t). FIG. 9D is a graph showing an example of the estimated value of a discharge value rate E(t). In the graphs of FIGS. 9A, 9B, 9C, and 9D, the abscissa represents the time indicating the accumulated value of "minutes" totaled from 0:00. The ordinate represents the value in each minute.

In particular, FIG. 9C shows the discharge value V(t) calculated from PV(t) and D(t) by equation (3). In the calculation, a value shown in FIG. 5A was used as PR(t), and a value shown in FIG. 5B was used as PRsell.

The graph of FIG. 9D indicates E(t) from Te (7:00) to Ts (23:00). Note that the charge and discharge value is 1. Referring to FIG. 9D, for example, the value E(t) near 600 min (10:00) is larger than those after 1,000 min (16:40). Hence, a high efficiency can be obtained by discharging the on-vehicle battery 4 near 600 min. That is, the balance between the electricity selling profit and the electricity purchase loss can further be increased.

FIG. 10 is a flowchart showing an example of a processing procedure of obtaining a discharge rule from the time series of the discharge value rate E(t). When E(t) is calculated in accordance with the procedure up to step S5 of FIG. 7, the discharge value rate calculation unit 73 rearranges the time indices t in descending order of the value E(t) (step S21). If times t with the same value E(t) exist, the time t of larger D(t) is ranked high.

In this step, however, only the time indices t in the time zone in which the vehicle EV is at home are rearranged. That is, only the time indices t during the period in which the vehicle EV is connected to the distribution line 21 of the home 100 are rearranged. The time indices t in the time zone in which the vehicle EV is not at home are excluded from the rearrangement target.

The discharge value rate calculation unit 73 accumulates D(t) in the order of rearranged t. That is, D(t) is added in descending order of discharge value rates E(t), and the sum gradually becomes large. The time t at which the sum exceeds the charge amount (dischargeable amount DW) of the on-vehicle battery 4 for the first time is defined as a time tth (step S22).

That is, the discharge value rate calculation unit 73 specifies the time tth at which the sum of D(t) is equal to or larger than the dischargeable amount DW of the on-vehicle battery 4 when the demand estimated value D(t) is added sequentially from the time t with the large discharge value rate estimated value E(t). The discharge value rate E(tth) at the time tth is the threshold used to determine whether to discharge the on-vehicle battery 4. The discharge value rate calculation unit 73 transfers the threshold E(tth) to the control unit 75 (step S23).

In the example of FIG. 9D, for example, tth = 667th min. At this time, E(667) = 33.96 (yen/kWh). That is, the threshold is 33.96 yen/kW. Hence, in the first embodiment, the discharge rule of the estimation target day is defined as "if the actual value of the discharge value rate E is 33.96 or more, the on-vehicle battery 4 is discharged". Based on this value, the discharge value rate calculation unit 73 transfers the threshold E(667) = 33.96 to the control unit 75.

In accordance with the above-described procedure, a discharge strategy that distributes the discharge amount of the on-vehicle battery 4 to each unit period in descending order of the estimated value of the discharge value rate is created. Note that the dischargeable amount DW of the on-vehicle battery 4 needs to be given to the discharge value rate calculation unit 73 in advance. A procedure for causing the EV processor 76 to calculate the dischargeable amount DW will be described next.

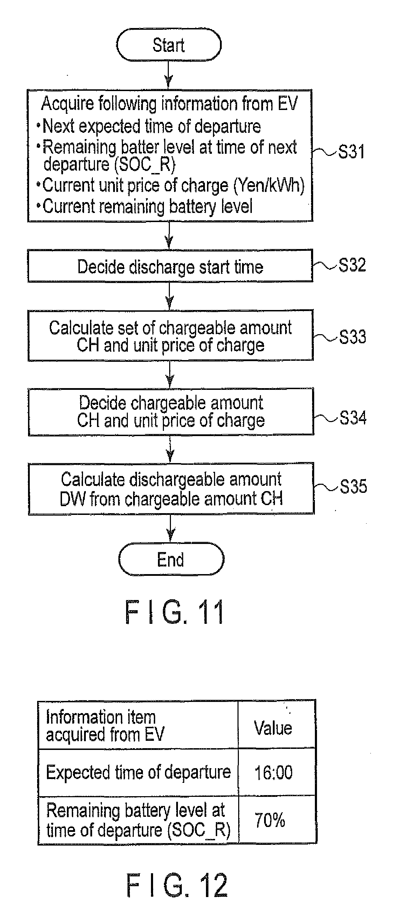

FIG. 11 is a flowchart showing an example of a processing procedure for calculating the dischargeable amount DW. First, the EV processor 76 acquires, from the vehicle EV, the next expected time of departure, the reserved remaining battery level (SOC_R) of the on-vehicle battery 4 at the expected time, the current remaining battery level, and the current unit price of charge (yen/kWh) (step S31). Note that the current unit price of charge may be acquired from another server (not shown) via the IP network 200.

As shown in FIG. 12, assume that 16:00 is designated as the next expected time of departure of the vehicle EV, and 70% is designated as the reserved remaining battery level of the battery at that time (16:00). That is, the user of the vehicle EV is scheduled to leave at 16:00, and the on-vehicle battery 4 is required to have electricity corresponding to at least 70% the capacity at that time. The user can freely use the electricity in the on-vehicle battery 4 and make a profit up to that time. However, the on-vehicle battery 4 needs to be surely charged to 70% at 16:00. The discharge strategy of the vehicle EV under these constraints will be explained below.

Referring back to FIG. 11, the EV processor 76 decides the discharge start time of the on-vehicle battery 4 based on the PV estimated value PV(t) and the demand estimated value D(t) (step S32). In this embodiment, the time at which sale of the power generated by the PV unit 101 becomes possible is defined as the discharge start time. Hence, the on-vehicle battery 4 is charged up to this discharge start time.

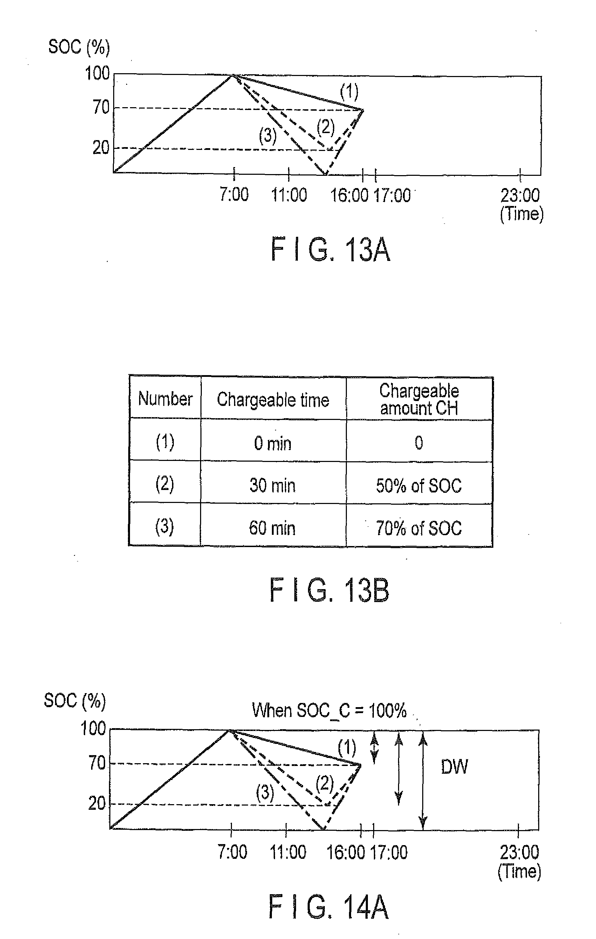

Next, the EV processor 76 calculates the set of a chargeable amount CH and the unit price of charge from the discharge start time to the departure (step S33). The chargeable amount CH indicates the electric energy that can charge the on-vehicle battery 4 by surplus power or power purchased from the power grid 6 even after the start of discharge of the on-vehicle battery 4. This will be described with reference to FIGS. 13A and 13B.

FIGS. 13A and 13B are views showing an example of the relationship between the chargeable time and the chargeable amount CH of the on-vehicle battery 4. The chargeable time is a given time immediately before the expected time of departure (16:00). In FIGS. 13A and 13B, (1) represents a case in which the chargeable time is 0 min; (2), a case in which the chargeable time is 30 min; and (3), a case in which the chargeable time is 60 min.

Referring to FIG. 13A, the discharge start time is 7:00. In case (1), since the chargeable time is 0 min, electricity corresponding to only 30% (100% - 70%) of SOC can be used up to the expected time of departure (16:00). In case (2), since the chargeable time is 30 min, electricity corresponding to 80% (100% - 20%) of SOC can be used at 15:30. In case (3), by exploiting the chargeable time of 60 min, electricity corresponding to 100% of SOC can be used up to 15:00.

As shown in FIG. 13B, in case (1), the chargeable amount CH is 0. In case (2), charge is performed to 50% of SOC in 30 min, and the chargeable amount CH is 50%. In case (3), charge is performed to 70% of SOC in 60 min, and the chargeable amount CH is 70%.

As described above, the power necessary to obtain the push up effect changes depending on the chargeable time. The shorter the chargeable time is, the smaller the chargeable amount CH is. The longer the chargeable time is, the larger the chargeable amount CH is. However, the unit price of electricity is high during the time zone of the chargeable time. Hence, the larger the charge amount is, the higher the unit price of charge is. In the embodiment, the unit price of charge is set in consideration of the balance between the charge amount and the cost, thereby calculating the chargeable amount CH.

Referring back to FIG. 11, the EV processor 76 decides the optimum values of the chargeable amount CH and the charge value based on the calculated chargeable amount CH and the unit price of charge (step S34). When the unit price of charge is high, the risk of missing a discharge opportunity or the like is high. Hence, the unit price of charge may be decided at the user's discretion. For example, the user may be allowed to set a plurality of operation modes such as a stability mode and an economic mode on the terminal 105. When the stability mode is designated, the chargeable amount CH for a low unit price of charge may be selected. When the economic mode is designated, the chargeable amount CH that raises the unit price of charge but increases the electricity selling profit as well may be selected.

The EV processor 76 calculates the dischargeable amount DW based on the decided chargeable amount CH (step S35). The dischargeable amount DW is obtained based on the SOC (SOC_C) at the start of discharge and the SOC (SOC_R) at the time of departure by following (i) to (iii).

[Mathematical 3]

if (SOC_C > SOC_R)

$$DW = SOC\_C - SOC\_R + CH \qquad \cdots (i)$$

else

if (SOC_R - SOC_C > CH)

$$DW = 0 (Only\ charge) \qquad \cdots (ii)$$

else

$$DW = CH - (SOC\_R - SOC\_C) \qquad \cdots (iii)$$

Conditions (i), (ii), and (iii) in this equation represent the magnitude relationship between SOC_C and SOC_R.

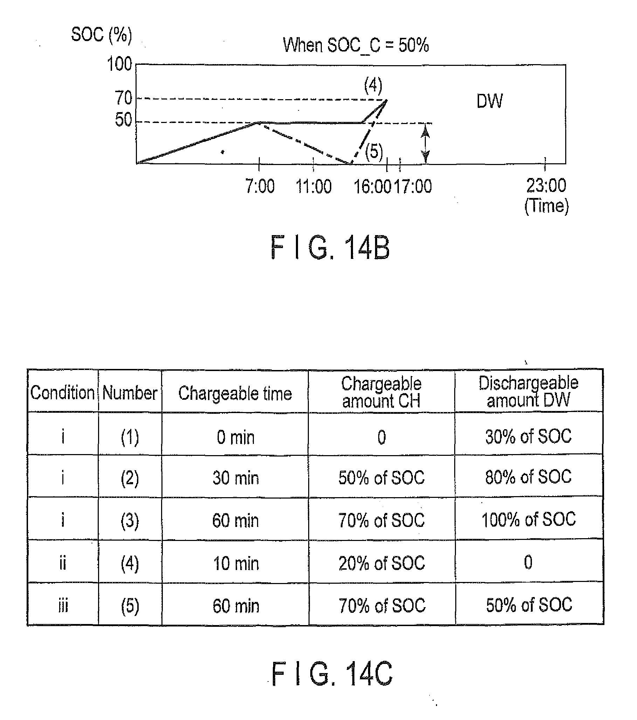

FIGS. 14A, 14B, and 14C are views showing an example of the relationship between the chargeable time, the chargeable amount CH, and the dischargeable amount DW of the on-vehicle battery 4. FIG. 14A corresponds to condition (i). As shown in FIG. 14A, the dischargeable amount DW can be increased in the order of (1), (2), and (3). The dischargeable amount in case (3) corresponds to 100% of SOC.

Case (4) shown in FIG. 14B corresponds to condition (ii). Under this condition, the dischargeable amount DW is 0, and no push up effect can be expected. Case (5) corresponds to condition (iii). For example, the dischargeable amount DW corresponding to 50% of SOC can be obtained in the chargeable time of 60 min.

Charge and discharge command generation by the control unit 75 will be described. The on-vehicle battery 4 is discharged or charged in accordance with a charge and discharge command given by the control unit 75. In this embodiment, the time series of a unit price CHGval(t) of charge is calculated. If the unit price CHGval(t) of charge is smaller than E(tth), the control unit 75 charges the on-vehicle battery 4. CHGval(t) is the sum of the value paid when the battery is charged by CHGval(t) at the time t and the loss generated when the PV power generation amount that can be sold has become 0. CHGamount(t) and CHGval(t) can be obtained using equations (5) to (8).

[Mathematical 4]

$$PVovD(t) = PV(t) - D(t) \qquad (PV(t) > D(t))$$
$$= 0 \qquad (PV(t) \leqq D(t))$$
$$\cdots (5)$$

$$DovPV(t) = D(t) - PV(t) \qquad (D(t) > PV(t))$$
$$= 0 \qquad (D(t) \leqq PV(t)) \qquad \cdots (6)$$

$$CHGamount(t) = Limit(t) - DovPV(t) \qquad \cdots (7)$$

$$CHGval(t) = \{PVovD(t) \times PRsell(t)$$
$$+CHGamount(t) \times PRbuy(t)\}/CHGamount(t)$$
$$\cdots (8)$$

PVovD(t) in equation (5) is a series that is the difference between the PV estimated value PV(t) and the demand estimated value D(t) when the former exceeds the latter or 0 when the former is equal to or smaller than the latter. Equation (6) is the same as equation (1).

CHGamount(t) in equation (7) is the power that can charge the on-vehicle battery 4 at the time t. Limit in equation (7) is the upper limit of the contract demand. The unit price CHGval(t) of charge is given by equation (8). In equation (8), PRbuy(t) represents the electricity rate at the time t. PRsell is the purchase price of PV power at the time t.

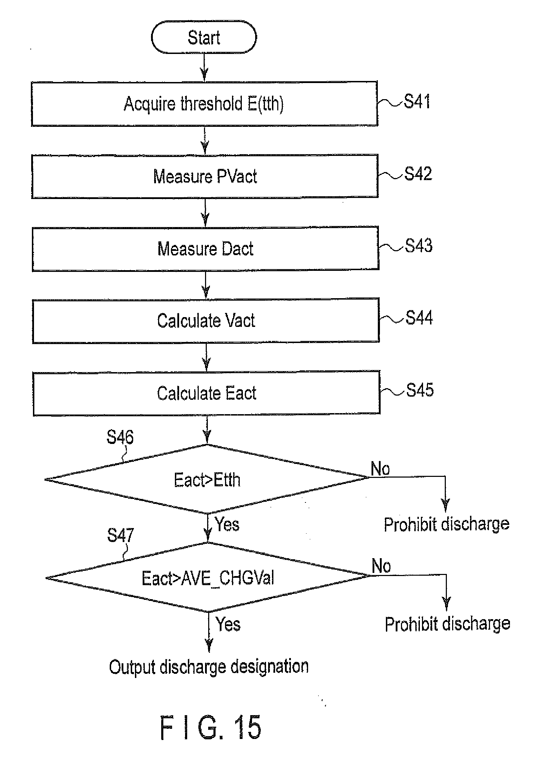

FIG. 15 is a flowchart showing the processing procedure of discharge command generation by the control unit 75. The control unit 75 acquires the threshold E(tth) as the discharge rule (step S41). Next, the control unit 75 acquires an actual value PVact of the PV power generation amount and an actual value Dact of the demand (steps S42 and S43). PVact is measured by, for example, the internal sensor of the PV unit 101. Dact is measured by, for example, a sensor connected to the distribution switchboard 20.

The control unit 75 obtains the discharge value at the current time, that is, the actual value Vact of the discharge value by equations (9) to (11) (step S44). Note that the suffix act in equations (9) to (11) and (12) represents an actual value.

[Mathematical 5]

$$DovPVact = Dact-PVact \qquad (Dact > PVact)$$
$$= 0 \qquad (Dact \leqq PVact)$$
$$\cdots (9)$$

$$PVpushact = min(PVact, Dact) \qquad \cdots (10)$$

$$Vact = PVpushact \times PRsell + DovPVact \times PR(Current\ time)$$
$$\cdots (11)$$

DovPVact in equation (9) is a series that is the difference between the actual value of the demand and the actual value of the PV power generation amount when the former exceeds the latter or 0 when the former is equal to or smaller than the latter.

PVpushact in equation (10) is the smaller one of PVact and Dact. PVpushact is the series of the power generation amount capable of pushing up the sold PV power amount by covering the actual value of the demand by discharge of the on-vehicle battery 4.

Vact in equation (11) is value obtained by discharge of Dact at the current time, that is, the discharge value.

Next, the control unit 75 calculates an actual value Eact of the discharge value rate based on equation (12) using Vact and Dact (step S45).

[Mathematical 6]

$$Eact = Vact/f(Dact) \qquad \cdots (12)$$

That is, Eact is a value obtained by dividing the sum of the cancel amount of the electricity purchase loss when Dact is covered by discharge of the on-vehicle battery 4 and the electricity selling profit based on PVact by a discharge amount considering the value. Note that the denominator of equation (12) may be changed to the actual value Dact of the demand.

When Eact ≥ E(tth) (YES in step S46), the control unit 75 gives discharge designation to the on-vehicle battery 4 to extract electricity corresponding to Dact. When Eact < E(tth) (NO in step S46), the control unit 75 does not discharge the on-vehicle battery 4, regarding that discharge at that time has no value.

If YES in step S46, the control unit 75 compares Each with an average unit price AVE_CHGval of charge. The average unit price AVE_CHGval of charge is obtained by equation (13).
[Mathematical 7]

$$\text{AVE\_CHGval} = \sum_{\text{Charge time up to SOC\_R}} \text{CHGval(t)} / \text{Charge amount}$$

$$\cdots (13)$$

If SOC is larger than SOC_R, the control unit 75 discharges the on-vehicle battery 4. However, if SOC is smaller than SOC_R, the control unit 75 calculates AVE_CHGval, and decides whether discharge is possible based on comparison between the value and Eact. AVE_CHGval is the average unit price of charge when discharge is performed to a desired discharge amount, and charge of power corresponding to the difference between SOC and SOC_R is performed in the desired chargeable time.

For example, assume that the current SOC is 70%, SOC_R is 80%, and the desired discharge amount is 10% in a case in which the vehicle EV is charged in 30 min immediately before departure (the case can designated by the user). In this case, SOC_R - (SOC - 10%) = 20%. That is, to return to SOC_R, charge in an amount corresponding to 20% needs to be performed in 30 min.

The control unit 75 calculates the average unit price AVE_CHGval of charge when the charge of 20% starts from 15:30. If AVE_CHGval < Eact, the control unit 75 executes discharge. Otherwise, discharge is not executed.

As described above, according to the first embodiment, the discharge value is calculated as an index capable of evaluating the net electricity purchase profit (electricity selling loss) considering the push up effect. At this time, a constraint that the on-vehicle battery 4 is connected to the home 100 via the connector 102 is included. In addition, the discharge value rate that is the discharge value per discharge amount is calculated. A discharge strategy capable of maximizing the electricity selling profit (or minimizing the electricity purchase loss) is created based on the discharge value rate. Returning the remaining charge level of the on-vehicle battery 4 to the designated value until the expected time of departure of the vehicle EV is also taken into consideration.

That is, it is possible to create a discharge rule capable of discharging the on-vehicle battery 4 that stores limited power in a time zone with a high discharge value. Hence, according to the first embodiment, the net profit of electricity selling can be maximized.

The discharge rule is given by the threshold E(tth) of the discharge value rate. Whether the on-vehicle battery 4 can be discharged is determined based on whether the actual value of the discharge value rate is equal to or larger than the threshold E(tth). This makes it possible to decrease the amount of rules and save the resources necessary for control as compared to an existing technique of on/off-controlling discharge simply based on a time.

For example, the time shown in FIG. 9 is the discharge time when the PV power generation estimation and demand estimation are solved completely correctly. However, it is difficult to completely accurately estimate the PV power generation amount or the power demand. When discharge of the on-vehicle battery 4 is controlled by a "schedule" based on a time, discharge may occur at a time with a low discharge value rate, or postponement of discharge may occur at a time with a high discharge value rate. That is, if the operation schedule is created based on only the estimated value, it may be impossible to implement the expected reduction of the heat and electricity cost due to the shift between the estimated value and the actual value.

However, as described above, when control is executed based on the rule "on/off of discharge is determined based on the discharge value rate", a more appropriate discharge strategy can be obtained. That is, in the first embodiment, discharge control is done based on the discharge value that is a completely new index. In addition, whether discharge is possible is decided based on the comparison result between the actual value and the threshold. This makes it possible to implement control that enables the user to expect a reduction of the heat and electricity cost even if the estimated value and the actual value deviate from each other.

Hence, the vehicle EV can be more economically used when the on-vehicle battery 4 provided on it is charged at an appropriate opportunity or used as an energy source of the home 100. By extension, reduction of the heat and electricity cost is promoted. It is therefore possible to provide an energy management system capable of exploiting the characteristic of an on-vehicle battery and advantageously operating a new energy device, an energy management method, a program, and a server.

[Second Embodiment]

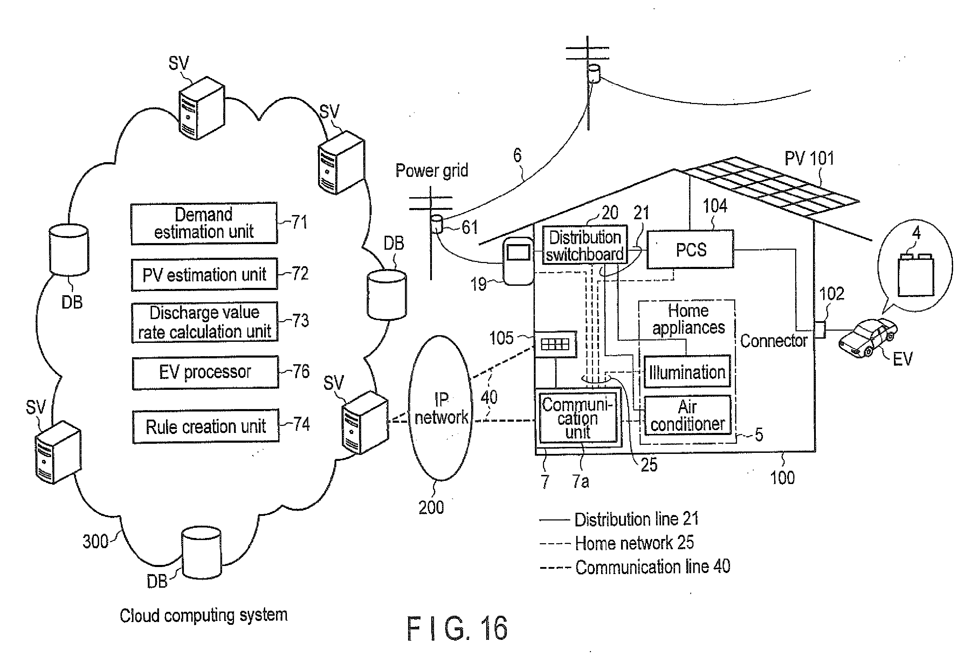

FIG. 16 is a block diagram showing an example of an energy management system according to the second embodiment. The same reference numerals as in FIG. 2 denote the same parts in FIG. 16, and only different parts will be described here. In the second embodiment, the functions implemented in the first embodiment are implemented by the cooperative operation of a cloud 300 and a home server 7.

The cloud 300 includes a server computer SV and a database DB. The server computer SV can include a single or a plurality of server computers. The databases DB can be either provided in the single server computer SV or distributively arranged for the plurality of server computers SV. In addition, the cloud 300 includes, as processing functions according to the second embodiment, a demand estimation unit 71, a PV estimation unit 72, a discharge value rate calculation unit 73, an EV processor 76, and a rule creation unit 74. These functional blocks can be implemented by the cooperative operation of the plurality of server computers SV or provided in the single server computer SV.

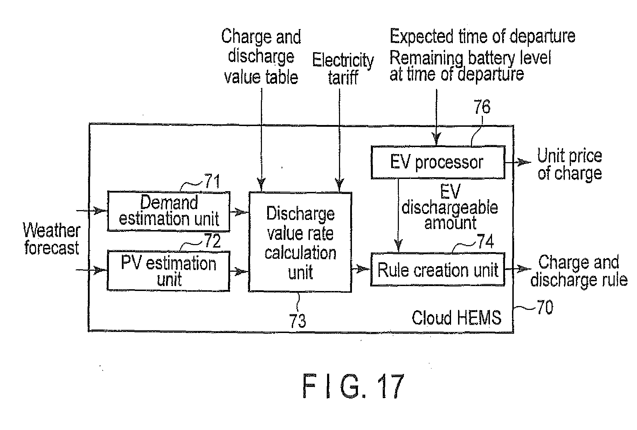

FIG. 17 illustrates an example of the server computer SV according to the second embodiment. FIG. 17 shows the server computer SV including the functional blocks of the cloud 300 in FIG. 16. In the second embodiment, this server computer will be referred to as a cloud HEMS 70.

The demand estimation unit 71 or the PV estimation unit 72 can use the enormous databases and calculation resources of the cloud computing system. This makes it possible to expect more accurate estimated values for both the demand and the PV power generation amount.

As in the first embodiment, the discharge value rate calculation unit 73 calculates the time series of the estimated value of the discharge value rate. The EV processor 76 acquires the expected time of departure of a vehicle EV and the remaining battery level of an on-vehicle battery 4 from the home server 7 via a communication line 40 and transfers them to the rule creation unit 74. As in the first embodiment, the rule creation unit 74 calculates a threshold E(tth) of the discharge value rate. The rule creation unit 74 also has a function of notifying the home server 7 of the threshold E(tth) as a discharge rule (discharge strategy) via the communication line 40.

As described above, in the second embodiment, functional objects of the energy management system are arranged in the cloud 300. That is, the discharge strategy is decided in the cloud 300, and the home server 7 is notified of the discharge rule via the communication line 40. Information necessary for creation of the discharge strategy is acquired by the cloud 300 or sent from the home server 7 to the cloud 300 via the communication line 40.

According to this form, the enormous calculation resources of the cloud computing system can be used. For example, PV power generation estimation or demand estimation sometimes requires calculations of heavy load. According to the second embodiment, however, an estimated value can be calculated accurately in a short time. By using an accurate PV power generation amount estimated value or demand estimated value, the validity of the discharge strategy can further be increased, as a matter of course.

Hence, according to the second embodiment as well, it is possible to provide an energy management system capable of advantageously operating a new energy device, an energy management method, a program, and a server.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such forms or modifications as would fall within the scope and spirit of the inventions.

**Claims**

1. An energy management system for managing energy of a customer, including a connector connected to a vehicle including an on-vehicle battery and capable of sending/receiving power to/from the on-vehicle battery, and a power generation unit configured to generate power derived from renewable energy, **characterized by** comprising:

   an estimation unit configured to estimate a demand of the energy of the customer to obtain a demand estimated value and estimate a production amount of the power of the power generation unit to obtain a production amount estimated value;
   a creation unit configured to create a discharge strategy capable of maximizing a balance obtained by subtracting an electricity purchase loss from an electricity selling profit using a push up effect of a sold electricity amount by discharge of the on-vehicle battery based on the demand estimated value and the production amount estimated value under a constraint for use of the on-vehicle battery; and
   a control unit configured to control discharge of the on-vehicle battery based on an actual value of the demand, the actual value of the production amount, and the discharge strategy.

2. The energy management system according to claim 1, **characterized by** further comprising a user interface configured to accept a designation of a period during which the vehicle is connected to the connector and a designation of a remaining battery level of the on-vehicle battery at an end of the period,
   wherein the creation unit creates the discharge strategy under the constraint that meets the designated period and remaining battery level, and
the control unit charges the on-vehicle battery, which has been discharged based on the discharge strategy, based on a charge value that reflects a unit price of charge.

3. The energy management system according to claim 1, **characterized in that** the creation unit
calculates an estimated value of a discharge value that is a sum of a cancel amount of the electricity purchase loss when the demand estimated value is covered by discharge of the on-vehicle battery and the electricity selling profit based on the production amount estimated value for each unit period within a reference period,
calculates the estimated value of a discharge value rate that is a value obtained by dividing the estimated value of the discharge value by a discharge amount of the on-vehicle battery for each unit period, and
creates the discharge strategy that distributes the discharge amount of the on-vehicle battery to each unit period in descending order of the estimated value of the discharge value rate.

4. The energy management system according to claim 3, **characterized in that** the creation unit
specifies the unit period in which the sum of the demand estimated value is not less than a dischargeable amount of the on-vehicle battery when the demand estimated value during the period in which the on-vehicle battery is connected to the connector is added sequentially from the unit period with the large estimated value of the discharge value rate, and
defines the estimated value of the discharge value rate in the specified unit period as a threshold, and
the control unit
calculates the actual value of the discharge value rate that is a value obtained by dividing the sum of the cancel amount of the electricity purchase loss when the actual value of the demand is covered by discharge of the on-vehicle battery and the electricity selling profit based on the actual value of the production amount by the discharge amount, and
discharges the on-vehicle battery when the actual value of the discharge value rate is not less than the threshold.

5. The energy management system according to claim 1, **characterized by** further comprising a local server provided in the customer and a cloud server connected to the local server via a network,
the cloud server comprising a notification unit configured to notify the local server of the discharge strategy via the network, the estimation unit, and the creation unit and
the local server comprising the control unit, and a reception unit configured to receive the notified discharge strategy.

6. An energy management method of managing energy of a customer including a connector connected to a vehicle including an on-vehicle battery and capable of sending/receiving power to/from the on-vehicle battery, and a power generation unit configured to generate power derived from renewable energy, **characterized by** comprising:

estimating a demand of the energy of the customer to obtain a demand estimated value;
estimating a production amount of the power of the power generation unit to obtain a production amount estimated value;
creating a discharge strategy capable of maximizing a balance obtained by subtracting an electricity purchase loss from an electricity selling profit using a push up effect of a sold electricity amount by discharge of the on-vehicle battery based on the demand estimated value and the production amount estimated value under a constraint for use of the on-vehicle battery; and
controlling discharge of the on-vehicle battery based on an actual value of the demand, the actual value of the production amount, and the discharge strategy.

7. The energy management method according to claim 6, **characterized by** further comprising:

creating the discharge strategy under the constraint that meets a period during which the vehicle is connected to the connector and a remaining battery level of the on-vehicle battery at an end of the period; and
charging the on-vehicle battery, which has been discharged based on the discharge strategy, based on a charge value that reflects a unit price of charge.

8. The energy management method according to claim 6, **characterized by** further comprising:

calculating an estimated value of a discharge value that is a sum of a cancel amount of the electricity purchase loss when the demand estimated value is covered by discharge of the on-vehicle battery and the electricity selling profit based on the production amount estimated value for each unit period within a reference period;

calculating the estimated value of a discharge value rate that is a value obtained by dividing the estimated value of the discharge value by a discharge amount of the on-vehicle battery for each unit period; and

creating the discharge strategy that distributes the discharge amount of the on-vehicle battery to each unit period in descending order of the estimated value of the discharge value rate.

9. The energy management method according to claim 8, **characterized by** further comprising:

specifying the unit period in which the sum of the demand estimated value is not less than a dischargeable amount of the on-vehicle battery when the demand estimated value during the period in which the on-vehicle battery is connected to the connector is added sequentially from the unit period with the large estimated value of the discharge value rate;

defining the estimated value of the discharge value rate in the specified unit period as a threshold;

calculating the actual value of the discharge value rate that is a value obtained by dividing the sum of the cancel amount of the electricity purchase loss when the actual value of the demand is covered by discharge of the on-vehicle battery and the electricity selling profit based on the actual value of the production amount by the discharge amount; and

discharging the on-vehicle battery when the actual value of the discharge value rate is not less than the threshold.

10. A program **characterized by** including an instruction that causes a computer to execute a method defined in any one of claims 6 to 9.

11. A server for managing energy of a customer, including a connector connected to a vehicle including an on-vehicle battery and capable of sending/receiving power to/from the on-vehicle battery, and a power generation unit configured to generate power derived from renewable energy, **characterized by** comprising:

an estimation unit configured to estimate a demand of the energy of the customer to obtain a demand estimated value and estimate a production amount of the power of the power generation unit to obtain a production amount estimated value;

a creation unit configured to create a discharge strategy capable of maximizing a balance obtained by subtracting an electricity purchase loss from an electricity selling profit using a push up effect of a sold electricity amount by discharge of the on-vehicle battery based on the demand estimated value and the production amount estimated value under a constraint for use of the on-vehicle battery; and

a control unit configured to control discharge of the on-vehicle battery based on an actual value of the demand, the actual value of the production amount, and the discharge strategy.

12. The server according to claim 11, **characterized by** further comprising a user interface configured to accept a designation of a period during which the vehicle is connected to the connector and a designation of a remaining battery level of the on-vehicle battery at an end of the period,

wherein the creation unit creates the discharge strategy under the constraint that meets the designated period and remaining battery level, and

the control unit charges the on-vehicle battery, which has been discharged based on the discharge strategy, based on a charge value that reflects a unit price of charge.

13. The server according to claim 11, **characterized in that** the creation unit

calculates an estimated value of a discharge value that is a sum of a cancel amount of the electricity purchase loss when the demand estimated value is covered by discharge of the on-vehicle battery and the electricity selling profit based on the production amount estimated value for each unit period within a reference period,

calculates the estimated value of a discharge value rate that is a value obtained by dividing the estimated value of the discharge value by a discharge amount of the on-vehicle battery for each unit period, and

creates the discharge strategy that distributes the discharge amount of the on-vehicle battery to each unit period in descending order of the estimated value of the discharge value rate.

14. The server according to claim 13, **characterized in that** the creation unit

specifies the unit period in which the sum of the demand estimated value is not less than a dischargeable amount of the on-vehicle battery when the demand estimated value during the period in which the on-vehicle battery is connected to the connector is added sequentially from the unit period with the large estimated value of the discharge value rate, and

defines the estimated value of the discharge value rate in the specified unit period as a threshold, and

the control unit

calculates the actual value of the discharge value rate that is a value obtained by dividing the sum of the cancel amount of the electricity purchase loss when the actual value of the demand is covered by discharge of the on-vehicle battery and the electricity selling profit based on the actual value of the production amount by the discharge amount, and

discharges the on-vehicle battery when the actual value of the discharge value rate is not less than the threshold.

FIG. 1

F I G. 2

EP 2 966 611 A1

Charge and
discharge
value table

Electricity
tariff

Expected time of departure
Remaining battery level
at time of departure (SOC_R)
Current unit price
of charge (Yen/kWh)
Current remaining battery level

# FIG. 3

| Power (W) | Value |
|-----------|-------|
| 0 | 0 |
| 200 | 0.5 |
| 500 | 0.8 |
| 1000 | 0.95 |

# FIG. 4

Purchased power

| Time zone | Rate (Yen/kWh) |
|---|---|
| 23:00~7:00 | 9 |
| 7:00~10:00, 17:00~23:00 | 23 |
| 10:00~17:00 | 28 |

F I G. 5A

PV surplus power purchase price

| Rate (Yen/kWh) |
|---|
| 34 |

F I G. 5B

F I G. 6

Start

Estimate PV power
generation amount PV(t) ~S1

Estimate power demand D(t) ~S2

Create charge rule
of onboard battery 4 ~S3

Calculate time series of estimated
value V(t) of discharge value ~S4

Calculate time series of estimated
value E(t) of discharge value rate ~S5

End

# F I G. 7

(Yen/kWh)                    Electricity rate

28
23
9
0
        7:00 11:00    17:00           23:00
        Te          (Time)            Ts

# F I G. 8A

F I G. 8B

F I G. 9A

F I G. 9B

(Yen)

V(t):Discharge value

1.2
0.8
0.4
0.0

0    200   400   600   800   1000  1200  1400

Time (indicating minutes totaled from 0:00)

F I G. 9C

(Yen/W)

E(t):Discharge value rate

35
30
25
20
15
10

0    200   400   600   800   1000  1200  1400

Time (indicating minutes totaled from 0:00)

F I G. 9D

Start

Rearrange time indices
in descending order of E(t)          S21

Calculate time t th                  S22

Transfer threshold E(t th) to control unit 75    S23

End

F I G. 10

Start

Acquire following information from EV
• Next expected time of departure
• Remaining batter level at time of next
  departure (SOC_R)
• Current unit price of charge (Yen/kWh)
• Current remaining battery level
~S31

Decide discharge start time ~S32

Calculate set of chargeable amount
CH and unit price of charge ~S33

Decide chargeable amount
CH and unit price of charge ~S34

Calculate dischargeable amount
DW from chargeable amount CH ~S35

End

F I G. 11

| Information item acquired from EV | Value |
|---|---|
| Expected time of departure | 16:00 |
| Remaining battery level at time of departure (SOC_R) | 70% |

F I G. 12

SOC (%)

100
70
20

(1)
(2)
(3)

7:00   11:00   16:00 17:00        23:00
(Time)

F I G. 13A

| Number | Chargeable time | Chargeable amount CH |
|--------|-----------------|----------------------|
| (1) | 0 min | 0 |
| (2) | 30 min | 50% of SOC |
| (3) | 60 min | 70% of SOC |

F I G. 13B

SOC (%)

When SOC_C = 100%

100
70
20

(1)
(2)
(3)

DW

7:00   11:00   16:00 17:00        23:00
(Time)

F I G. 14A

SOC (%)

When SOC_C = 50%

100

70

50

(4)

DW

(5)

7:00    11:00    16:00 17:00          23:00
(Time)

F I G. 14B

| Condition | Number | Chargeable time | Chargeable amount CH | Dischargeable amount DW |
|-----------|--------|-----------------|----------------------|--------------------------|
| i | (1) | 0 min | 0 | 30% of SOC |
| i | (2) | 30 min | 50% of SOC | 80% of SOC |
| i | (3) | 60 min | 70% of SOC | 100% of SOC |
| ii | (4) | 10 min | 20% of SOC | 0 |
| iii | (5) | 60 min | 70% of SOC | 50% of SOC |

F I G. 14C

**F I G. 15**

Cloud computing system

F I G. 16

SV
SV
DB
DB
DB
SV
SV
DB

Demand estimation unit — 71
PV estimation unit — 72
Discharge value rate calculation unit — 73
EV processor — 76
Rule creation unit — 74

300

IP network
200
105
40

Power grid
6
61
19

PV 101
104
Distribution switchboard
20 21
PCS
102
Connector
Home appliances
Illumination
Communication unit
Air conditioner
4
EV
5
7 7a
25
100

——— Distribution line 21
----- Home network 25
--- -- Communication line 40

EP 2 966 611 A1

F I G. 17

## INTERNATIONAL SEARCH REPORT

| International application No. |
|---|
| PCT/JP2013/083652 |

**A. CLASSIFICATION OF SUBJECT MATTER**
*G06Q50/06*(2012.01)i, *B60L11/18*(2006.01)i, *H02J3/32*(2006.01)i

According to International Patent Classification (IPC) or to both national classification and IPC

**B. FIELDS SEARCHED**

Minimum documentation searched (classification system followed by classification symbols)
G06Q50/06, B60L11/18, H02J3/32

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-130618 A (Panasonic Corp.),<br>30 June 2011 (30.06.2011),<br>paragraphs [0012] to [0028], [0048] to [0055],<br>[0090] to [0120]<br>(Family: none) | 1,5,6,10,11<br>2-4,7-9,<br>12-14 |
| Y<br>A | JP 2012-228034 A (Mitsubishi Electric Corp.),<br>15 November 2012 (15.11.2012),<br>paragraphs [0014] to [0052]<br>(Family: none) | 1,5,6,10,11<br>2-4,7-9,<br>12-14 |
| A | JP 2012-151948 A (Panasonic Corp.),<br>09 August 2012 (09.08.2012),<br>entire text; all drawings<br>(Family: none) | 1-14 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 March, 2014 (10.03.14) | 18 March, 2014 (18.03.14) |

| Name and mailing address of the ISA/<br>　　Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2013/083652 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-124287 A (Sony Corp.), 23 June 2011 (23.06.2011), entire text; all drawings & US 2011/0137591 A1 & CN 102111089 A | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012065300 A
- JP 2011072166 A
- JP 2011092002 A
- JP 2011244682 A

**Non-patent literature cited in the description**

- **SHIMADA ; KUROKAWA.** Insolation Forecasting Using Weather Forecast with Weather Change Patterns. *IEEJ Trans. PE,* 2007, vol. 127 (11), 1219-1225